# EUROPÄISCHE PATENTSCHRIFT

(11) **EP 2 218 320 B1**
(45) Veröffentlichungstag und Bekanntmachung des Hinweises auf die Patenterteilung: **23.01.2013**
(21) Anmeldenummer: 09170165.6
(22) Anmeldetag: 14.09.2009
(51) Int. Cl.: A01D 43/08

(54) **Feldhäcksler mit einstellungsgekoppelter Zuführ- und Gutbearbeitungseinrichtung**
Chaff cutter with setting-coupled supply and goods processing device
Ramasseuse-hacheuse dotée d'un dispositif de traitement et de transport de marchandises à réglage couplé

(30) Priorität: 13.02.2009 DE 102009004821
(43) Veröffentlichungstag der Anmeldung: 18.08.2010
(73) Patentinhaber: CLAAS Selbstfahrende Erntemaschinen GmbH, 33428 Harsewinkel (DE)
(72) Erfinder: Haffert, Andreas, Prof. Dr., 33334 Gütersloh (DE); Bönig, Ingo, Dr., 33330 Gütersloh (DE)

(56) Entgegenhaltungen:
- EP-A1- 1 632 131
- EP-A1- 2 132 974

## Beschreibung

Die Erfindung betrifft einen Feldhäcksler.

Feldhäcksler bzw. Einzugsvorrichtungen dafür werden in landwirtschaftlichen Betrieben eingesetzt, um auf großen landwirtschaftlichen Flächen stehendes Erntegut zu schneiden, aufzunehmen, zu zerkleinern (häckseln) und das zerkleinerte Gut an Transporteinrichtungen weiterzuleiten. Feldhäcksler weisen in der Regel eine mit Messern bestückte Häckseltrommel auf, die zur Zerkleinerung des Erntegutes dient. Die Häckseltrommel wird dazu mit in der Regel einigen Hundert Umdrehungen pro Minute gedreht und zerkleinert dadurch das ihr von einer Zuführ- bzw. Einzugsvorrichtung zugeführte Erntegut. Beim Durchgang durch die Zuführeinrichtung unterliegt das Erntegut einer Vorverdichtung, bevor es der Häckseltrommel zum Häckseln zugeführt wird und anschließend mit Hilfe eines Gebläses in einen Auswurfkrümmer befördert wird, durch den es dann schließlich auf ein Transportfahrzeug gelangt.

Die Zuführeinrichtung bei üblichen Feldhäckslern weist in der Regel zwei untere, starr gelagerte Vorpresswalzen und zwei zu diesen beabstandete obere Vorpresswalzen auf. Die oberen Vorpresswalzen sind höhenbeweglich gelagert und mit einer gewöhnlich durch eine Feder aufgebrachten Kraft nach unten beaufschlagt Dadurch ist es möglich, in Abhängigkeit von der zwischen den unteren und den oberen Vorpresswalzen aufgenommenen Erntegutmenge eine Abstandsvariation der Walzen herbeizuführen bzw. einzustellen. Eine Schnittlänge des Erntegutes wird u.a. durch die Anzahl der Messer auf der rotierenden Häckseltrommel beeinflusst. Daneben bestimmt sich die Schnittlänge durch das Verhältnis der Drehgeschwindigkeiten der Vorpresswalzen und der Häckseltrommel. Eine solche Variation wird gewöhnlich über ein Schaltgetriebe oder über einen hydrostatischen Antrieb hervorgerufen.

Aus dem Stand der Technik sind unterschiedliche Arten der Schnittlängeneinstellung etwa durch eine Regelung der gerade angeführten Drehzahlverhältnisse bekannt. Insbesondere ist in der DE 196 32 977 A1 eine Vorrichtung und ein Verfahren zur Einzugssteuerung eines Feldhäckslers beschrieben, wobei eine konstante Häcksellänge des Erntegutes sichergestellt werden soll. Dazu werden Drehzahlen der Einzugsorgane und der Häckseltrommel ermittelt, an eine Auswerteelektronik weitergegeben und von dieser derart ausgewertet, dass bei einer Abweichung eines Ist-Drehzahlverhältnisses von einem Soll-Drehzahlverhältnis von einer Auswerteelektronik ein Stellsignal ausgegeben wird, um einen hydrostatischen Antrieb zu regeln. Dabei wird bei Vorliegen einer Abweichung zwischen Ist-Wert und Soll-Wert des Drehzahlverhältnisses eine Variation der Drehzahl der Einzugswalzen und/oder der Häckseltrommel durchgeführt, um die Abweichung des Soll- von dem Ist-Drehzahlverhältnis zu verringern bzw. zu beheben. Dazu wird die Geschwindigkeit der Einzugswalzen über einen Sensor aufgenommen, die in einen entsprechenden Regelkreis gegeben wird. Die dabei entstehenden Regelschwingungen sind nachteilig.

Aus der DE 102 45 885 A1 ist eine Erntemaschine mit einer Zuführeinrichtung, mit einer Gutbearbeitungseinrichtung und mit einer Steuerung bekannt. Die Steuerung ist dazu ausgebildet, auf der Grundlage der erfassten Drehzahl der Gutbearbeitungseinrichtung bzw. Zuführeinrichtung eine Stellgröße zu erzeugen, die bei einer Abweichung eines aktuellen Drehzahlverhältnisses von Zuführeinrichtung und Gutbearbeitungseinrichtung von einem Soll-Drehzahlverhältnis dieser Abweichung entgegenwirkt und sie zumindest verringert. Dabei kann die Steuerung die Stellgröße für die Zuführeinrichtung derart erzeugen, dass diese nicht von einer Erfassung der Geschwindigkeit, d. h. Drehzahl der Zuführeinrichtung oder der Gutbearbeitungseinrichtung, abhängt. Bei dieser Erntemaschine kann auf einen die Drehzahl der Zuführeinrichtung oder der Gutbearbeitungseinrichtung erfassenden Sensor verzichtet werden, der mechanischen und chemischen Einflüssen ausgesetzt werden müsste. Ebenso ergibt sich als Vorteil, dass sich keine Regelschwingungen in der Steuerung der Erntemaschine aufbauen können. Dadurch, dass die Schnittlängeneinstellung und Einzugssteuerung im Wesentlichen auf einem Drehzahlabgleich zwischen Ist- und Soll-Verhältnissen basiert, kann eine Einstellung der Menge eines der Gutbearbeitungseinrichtung zuzuführenden bzw. die Zuführeinrichtung durchsetzenden Menge an Erntegut hinsichtlich eines ökonomischen Betriebsablaufs berücksichtigt werden.

Es hat sich aber bei den im Stand der Technik bekannten Erntemaschinen bzw. Feldhäckslern gezeigt, dass eine genaue bzw. eine den Einsatzbedingungen angepasste Einstellung der Menge an zwischen Zuführeinrichtung und Gutbearbeitungseinrichtung befindlichem Erntegut wichtig ist. Denn bei einem Erntevorgang mit kleinen Schnittlängen erfolgt eine Zuführung des Ernteguts von der Zuführeinrichtung zu der Gutbearbeitungseinrichtung mit einer niedrigen Geschwindigkeit, wodurch bei gleichbleibender Arbeitsgeschwindigkeit der Gutbearbeitungseinrichtung eine kleine Schnittlänge des Erntegutes erreicht werden kann. Eine bei gleichbleibender Fahrgeschwindigkeit des Feldhäckslers erfolgende Verringerung der Transportgeschwindigkeit des Erntegutes innerhalb des Feldhäckslers führt aber dazu, dass sich das konstant von der Bearbeitungsfläche aufgenommene Erntegut innerhalb der In Form von übereinander angebrachten Walzen aufgebauten Zuführeinrichtung aufstellt. Je nach Feuchtigkeitsbedingungen bzw. je nach Art des Erntegutes kann es dabei durchaus zu Verstopfungen kommen, die zumindest eine Unterbrechung des Erntebetriebs erforderlich machen.

Sollen dagegen längere Schnittlängen eingestellt werden, so wird dies zur Gewährleistung einer gleichbleibenden Drehzahl der Gutbearbeitungseinrichtung durch eine Erhöhung der Transportgeschwindigkeit des Erntegutes innerhalb des Feldhäckslers bzw. der Erntemaschine erreicht. Dies geschieht in der Regel durch eine Erhöhung der Drehzahl der Walzen der Zuführeinrichtung. Im Fall eines ungestörten Erntebetriebs, d. h. einer gleichbleibenden Geschwindigkeit des Feldhäckslers und einer dadurch bedingten gleichmäßigen Aufnahme des Erntegutes von dem Feld, ist daher eine Verringerung der Menge zwischen der Zuführeinrichtung und der Gutbearbeitungseinrichtung zu beobachten. Es findet also eine geringere Verdichtung bzw. Vorpressung des Erntegutes statt, was die Häckselqualität reduziert und auch zu einem nicht-synchronen Lauf der Walzen führen kann.

Aus der EP 1 632 131 A1 ist ein in mehreren Gängen betreibbares Lastschaltgetriebe für die Einzugs- und Vorpresswalzen eines Feldhäckslers bekannt. Unter anderem ist die Möglichkeit offenbart, den Erntegutdurchsatz anhand einer Auslenkung der oberen gegenüber den unteren Zuführwalzen zu messen.

Der Erfindung liegt daher die Aufgabe zugrunde, unter Vermeidung der aus dem Stand der Technik bekannten Nachteile eine Abstimmung bzw. Einstellung von Häcksellängen bei Einbehaltung einer angestrebten Gutmattendicke zu erzielen.

Diese Aufgabe wird gelöst durch einen Feldhäcksler mit den Merkmalen des Anspruchs 1. Bevorzugte Weiterbildungen der Erfindung sind Gegenstand der Unteransprüche. Weitere Vorteile und Merkmale der Erfindung ergeben sich aus den Ausführungsbeispielen.

Ein erfindungsgemäßer Feldhäcksler zur Bearbeitung landwirtschaftlicher Flächen enthält eine Antriebseinheit, eine Gehäuseeinrichtung, eine Steuerungseinrichtung, wenigstens eine Flächenbearbeitungsvorrichtung zur Aufnahme von Erntegut, eine an der Gehäusseinrichtung angebrachte, der Flächenbearbeitungsvorrichtung zugeordnete Zuführeinrichtung für das zu häckselnde Erntegut und wenigstens eine Gutbearbeitungseinrichtung für das Erntegut, wobei mit der Zuführeinrichtung das von dem Feldhäcksler aufgenommene Erntegut zu der Gutbearbeitungseinrichtung transportiert wird. Der erfindungsgemäße Feldhäcksler zeichnet sich dadurch aus, dass ein Sensor zur Erfassung eines Maßes für die Gutmattendicke vorgesehen ist und ein Regelkreis vorgesehen ist, der betreibbar ist, die Fördergeschwindigkeit der Zuführeinrichtung in Abhängigkeit der Gutmattendicke derart einzustellen, dass eine gewählte Gutmattendicke erreicht und beibehalten wird.

Vorteilhafterweise wird durch eine gekoppelte Veränderung der Fördergeschwindigkeit der Gutbearbeitungseinrichtung und der Drehzahl Zuführeinrichtung unter Beibehaltung der Schnittlänge ein reibungsloser Betriebsablauf eingestellt, bei dem die angestrebte Gutmattendicke und die eingestellte Schnittlänge in weiten Betriebsbereichen erhalten wird.

Die Erfindung bringt den Vorteil mit sich, einen Feldhäcksler ökonomisch betreiben zu können, wobei insbesondere eine Änderung der Erntegeschwindigkeit bzw. Unterbrechung des Erntevorgangs weitestgehend vermieden werden kann. Insbesondere sind die Fördergeschwindigkeit und ggf. die Drehzahl derart einstellbar, dass die eingestellte Gutmattendicke unabhängig von der gewählten Schnittlänge erhalten bleibt. Das wird dadurch erzielt, dass zunächst die Fördergeschwindigkeit der Zuführeinrichtung so angepasst bzw. variiert wird, dass die gewählte oder gewünschte Gutmattendicke erreicht und beibehalten wird. Anschließend wird In Abhängigkeit von der gewählten Schnittlänge des Erntegutes die Drehzahl der Gutbearbeitungseinrichtung entsprechend eingestellt. Dadurch werden unabhängig von der Fahrgeschwindigkeit weitgehend konstante Bedingungen ermöglicht.

Die Gutbearbeitungseinrichtung ist bevorzugt als eine umfangsseltlg mit einer Vielzahl von Häckselmessern bestückte Häckseltrommel ausgeführt. Die Bearbeitungsgeschwindigkeit bzw. Drehzahl der bevorzugten Gutbearbeitungseinrichtung wird im Wesentlichen durch die Drehzahl der Häckseltrommel festgelegt. Bei einem erfindungsgemäßen Feldhäcksler ist die Zuführeinrichtung aus wenigstens einem Paar vorbelastbarer Walzen gebildet, zwischen denen von dem Feldhäcksler aufgenommenes Erntegut zu der Gutbearbeitungseinrichtung transportiert wird. Die Fördergeschwindigkeit der Zuführeinrichtung wird im Wesentlichen durch die Drehzahl der Walzen bestimmt.

Bei einer besonders bevorzugten Ausführungsform der vorliegenden Erfindung Ist es vorgesehen, die Drehzahl der Gutbearbeitungseinrichtung und/oder die Fördergeschwindigkeit der Zuführeinrichtung kontinuierlich zu verändern. Bevorzugt erfolgt eine Veränderung der Fördergeschwindigkeit der Zuführeinrichtung und der Drehzahl der Gutbearbeitungseinrichtung gleichzeitig.

In einer anderen Ausführungsform ist vorgesehen, die Veränderung der Gutbearbeitungseinrichtung der Zuführeinrichtung und ggf. der Drehzahl der Gutbearbeitungseinrichtung zumindest stufenweise durchzuführen. Dabei kann eine angepasste Veränderung der Bearbeitungsgeschwindigkeiten, d.h. der Fördergeschwindigkeit und der Drehzahl zumindest in Stufen gleichzeitig durchgeführt werden. Vorzugsweise wird dazu ein Schaltgetriebe oder ein hydrostatischer Antrieb verwendet.

In einer weiteren Ausführungsform der vorliegenden Erfindung ist es möglich, die angepasste Veränderung der Fördergeschwindigkeit der Gutzuführeinrichtung und der Drehzahl der Gutbearbeitungseinrichtung dadurch auszuführen, dass die Drehzahl der Gutbearbeitungseinrichtung verändert wird und nachfolgend dann im Rahmen der angepassten Veränderung die Fördergeschwindigkeit der Zufuhreinrichtung verändert wird. Es versteht sich, dass die Reihenfolge umkehrbar ist.

Der Sensor ist insbesondere im Bereich der Zuführeinrichtung vorgesehen. Das Sensorsignal kann z.B. ein Maß für den Abstand der Einzugswalzen des wenigstens einen Einzugswalzenpaares verwendet werden, aus dem auf die Gutmattendicke zurückgerechnet werden kann, da die Durchmesser der einzelnen Einzugswalzen bekannt sind. Der freie Abstand zwischen den Einzugswalzen eines Elnzugswalzenpaares entspricht der Gutmattendicke. Als Sensorsignal kann z.B. auch die Auslenkung der Vorpresswalzen verwendet werden, die über ein Potentiometer, ein Winkelmessgerät oder einen sonstigen Sensor erfasst werden kann.

Vorzugsweise werden die Signale des Sensors von der Steuerungseinrichtung verarbeitet, um die Fördergeschwindigkeit der Zuführeinrichtung in Abhängigkeit einer Differenz von der erfassten Gutmattendicke und der angestrebten bzw. eingestellten oder vorgegebenen Gutmattendicke entsprechend zu verändern. Die Fördergeschwindigkeit der Zuführeinrichtung resultiert aus der Drehzahl der Einzugswalzen des wenigstens eines Einzugswalzenpaares. Die Nutzung einer höheren Anzahl von Einzugswalzenpaaren liegt im Rahmen der Erfindung.

Die sich aus der Fördergeschwindigkeit ergebende Gutgeschwlndigkeit kann über Radarsensoren an wenigstens einer Stelle erfasst werden und kann zur Steuerung eingesetzt werden.

In bevorzugten Ausgestaltungen ist zur Erzielung einer angestrebten Gutmattendicke eine Bearbeitungsgeschwindigkeit der Flächenbearbeitungsvorrichtung zur Aufnahme von Erntegut einstellbar.

In bevorzugter Ausführung ist die Betriebsgröße vorteilhafterweise eine Menge des im Bereich der Zuführeinrichtung vorhandenen Ernteguts. Weiter bevorzugt wird als Betriebsgröße die über Sensoren bestimmte Dichte bzw. Dicke einer Erntegutmatte im Bereich der Zuführeinrichtung verwendet.

Die gekoppelte bzw, abgestimmte Einstellung der Betriebsgeschwindigkeiten Drehzahlen der Zuführeinrichtung und der Gutbearbeitungseinrichtung erfolgt bevorzugt durch die Fahrzeug-Steuerungsvorrichtung, die dazu Messgrößen wenigstens eines Sensors erhält.

Insgesamt ermöglicht die Erfindung einen optimierten Häckselprozess. Eine Reduzierung der Erntegutaufnahme, wie im Stand der Technik ist im Regelfall nicht mehr nötig und die Erntegeschwindigkeit muss nicht reduziert werden.

In vorteilhaften Weiterbildungen wird eine definierte Gutmattenhöhe durch Erhöhung der Drehzahlen der Vorpresswalzen und der Häckseltrommel bei kleinen Schnittlängen erreicht Dadurch kann die Gutmattenhöhe bei gleichbleibender Erntegeschwindigkeit und gleichbleibendem Erntegutaufkommen reduziert werden.

Es ist bevorzugt möglich, eine definierte Gutmattenhöhe durch Verringerung der Drehzahlen der Vorpresswalzen und der Häckseltrommel bei langen Schnittlängen zu erreichen. Durch Verringerung der Drehzahlen wird das Erntegut vor den Vorpresswalzen leicht aufgestaut, so dass die sonst bei der Wahl von langen Schnittlängen möglicherweise auftretende schlechte Vorpressung des Erntegutes durch Erhöhung der Gutmatte vermieden wird.

Insbesondere bei sehr geringen Erntegutbeständen kann es vorgesehen sein, dass zusätzlich der Einzugsbereich vor den Vorpresswalzen eingestellt und insbesondere verkleinert werden kann. Auch eine seitliche Begrenzung des Einzugsbereichs Ist bevorzugt, um auch unter diesen Bedingungen noch eine definierte Gutmattenhöhe erreichen zu können.

In allen Fällen hängt die definierbare Gutmattenhöhe von der Erntegutart bzw. von der Erntegutfeuchte ab.

Es bieten sich mit der Erfindung gestufte oder auch ganz variable Einstellmöglichkeiten der jeweiligen Drehzahlen.

Die Erfindung wird nachfolgend in Zusammenhang mit den begleitenden, teilweise stark vereinfacht gehaltenen Zeichnungen anhand von Ausführungsbeispielen näher beschrieben.

In den Figuren zeigen:
- Figur 1: ein landwirtschaftliches Fahrzeug In Form eines Feldhäckslers in einer teilweise geschnittenen Seitenansicht;
- Figur 2: eine Prinzipdarstellung einer ersten Ausführungsform zur Einstellung der Betriebsgeschwindigkeiten der Zuführ- und Gutbearbeitungseinrichtung;
- Figur 3: eine Prinzipdarstellung einer zweiten Ausführungsform zur Einstellung der Betriebsgeschwindigkeiten der Zuführ- und Gutbearbeitungseinrichtung;
- Figur 4: eine Prinzipdarstellung eines in dem erfindungsgemäßen Feldhäckslers einsetzbaren Planetengetriebes; und
- Figur 5: eine schematische Seitenansicht des Vorsatzgeräts, der Einzugseinrichtung und der Häckseltrommel;

Die Erfindung wird nachfolgend anhand der Betriebsweise eines Feldhäckslers dargestellt. Dabei wird der dem Fachmann hinlänglich bekannte Feldhäcksler nur so weit beschrieben, als es zum Verständnis der beanspruchten Betriebsweise notwendig ist.

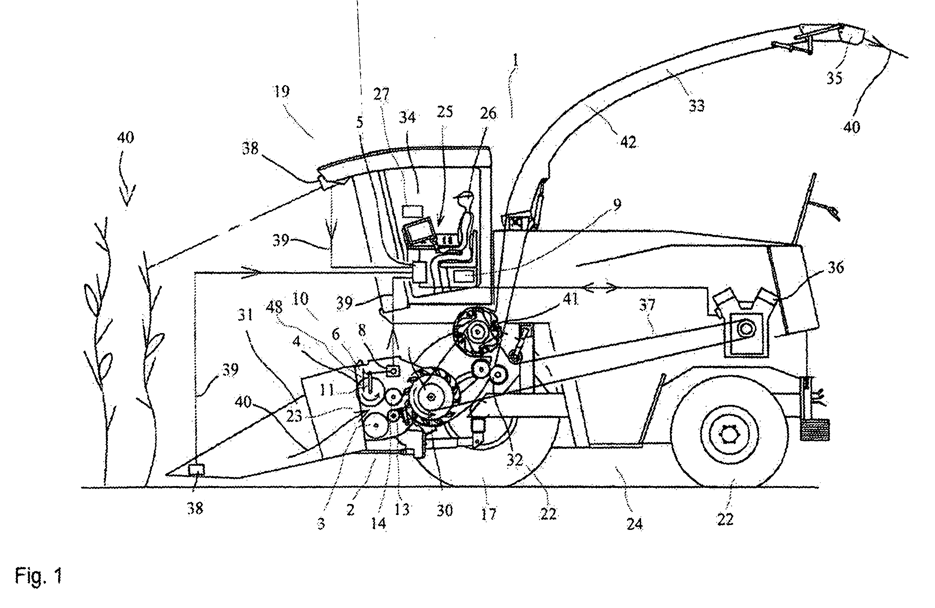

Der in Figur 1 dargestellte Feldhäcksler 1 weist ein Gehäuse 19 und ein Fahrgestell 24 auf, an dem die Räder 22 angeordnet sind. Ein Motor 36 dient als Antrieb, der über einen Riemen 37 mit den Arbeitsorganen des Feldhäckslers 1 in Verbindung steht.

Das zu erntende Erntegut 40 wird über ein Vorsatzgerät 31 geschnitten und aufgenommen. An das Vorsatzgerät 31 ist die Zuführeinrichtung 10 angeschlossen, welche hier im Ausführungsbeispiel über zwei untere Einzugs- bzw. Vorpresswalzen 3, 13 und zwei obere Einzugs- bzw. Vorpresswalzen 4, 14 verfügt, die an einem Rahmen oder Gehäuse 2 angeordnet sind.

Die Einzugs- und Vorpresswalzen 3, 13 und 4, 14 werden durch Belastungsmittel 6 aufeinander vorbelastet, um jederzeit einen ausreichenden Anpressdruck auf die sich durch die Einzugswalzen hindurch bewegende Gutmatte auszuüben, sodass nicht einzelne Streifen aus dem Erntegut 40 von der sich im Anschluss an die Einzugsvorrichtung 10 befindende Häckseltrommel 30 herausgezogen und nahezu unzerkleinert weiter transportiert werden.

Um eine definierte Schnittlänge zu gewährleisten werden bei dem Feldhäcksler 1 auf dem Weg des Ernteguts 40 durch die Maschine laufend die Vortriebsgeschwindigkeiten erhöht. Das bedeutet, dass die Vorpress- und Einzugswalzen 3, 13; 4, 14 mit einer geringeren Umfangsgeschwindigkeit angetrieben werden als die Häckseltrommel 30, die wiederum mit einer geringeren Umfangsgeschwindigkeit als die Nachzerkleinerungseinrichtung 32 betrieben wird. Der Nachbeschleuniger 41 transportiert das zu befördernde Erntegut 40 durch den Förderschacht 42 und durch den Auswurf 33 und an der Auswurfkrümmerklappe 35 vorbei hinaus auf einen benachbart zu dem Feldhäcksler 1 angeordneten und hier nicht dargestellten Transportwagen, der das geerntete und bearbeitete Erntegut 40 abtransportiert.

Der Feldhäcksler 1 verfügt über eine Fahrzeugkabine 34, die Platz für einen Benutzer 26 und gegebenenfalls einen Mitfahrer bietet. Eine Anzeigeeinrichtung 25 ist vorgesehen, um dem Benutzer 26 über die aktuellen Bedingungen zu informieren. So sind für ihn Situationen absehbar, wo er ggf. die Betriebseinstellungen ändern muss.

Eine Bedieneinrichtung 5 dient zur Steuerung des Feldhäckslers 1 und/oder der Zuführeinrichtung 10. Die Bedieneinrichtung 5 kann mit einem oder mehreren Sensoren 38 über Leitungen 39 verbunden sein, um den Feldhäcksler 1 insgesamt und die Zuführeinrichtung 10 entsprechend zu steuern.

Die Zuführeinrichtung 10 und insbesondere der Anpressdruck des Belastungsmittels 6, welches hier über ein hydraulisches System 8 verfügt, wird von der Bedieneinrichtung 5 gesteuert, wobei wenigstens ein Fahrparameter berücksichtigt wird. Das bedeutet hier, dass der Hydraulikzylinder 11 des hydraulischen Systems 8 einen erhöhten Anpressdruck von den oberen Einzugswalzen 4, 14 auf die unteren Einzugswalzen 3, 13 aufbringt, wenn die Fahrgeschwindigkeit von einer ersten Geschwindigkeit beispielsweise auf eine zweite Geschwindigkeit ansteigt.

Für den Betrieb wird eine gewünschte oder gewählte Gutmattendicke 23 vorgegeben. Die vorgegebene Gutmattendicke 23 kann z. B. von der Art des Ernteguts 40 und weiteren Faktoren abhängig sein. Um die vorgegebene Gutmattendicke 23 im Betrieb einzuhalten, wird die Fördergeschwindigkeit der als Vorpresswalzen 3, 4 und 13, 14 ausgeführten Zuführeinrichtung entsprechend angepasst.

Ein Sensor 48 kann vorgesehen sein, der die Gutmattendicke 23 oder ein repräsentatives Maß dafür erfasst. Dementsprechend kann ein Regelkreis vorgesehen sein, der die Rotationsgeschwindigkeit der Vorpresswalzen 3, 4 und 13, 14 verringert, wenn die Gutmattendicke 23 abnimmt und der die Rotationsgeschwindigkeit erhöht, wenn die Gutmattendicke 23 über den gewünschten oder vorgewählten Wert hinaus weiter zunimmt. Darüber wird die Fördergeschwindigkeit der Zuführeinrichtung eingestellt.

Nach der Einstellung der Rotationsgeschwindigkeit der Vorpresswalzen wird die Rotationsgeschwindigkeit der als Hückseltrommel 30 ausgeführten Gutbearbeitungseinrichtung eingestellt, um die gewählte Schnittlänge für das Häckselgut zu erhalten.

Beim Feld-Betrieb des erfindungsgemäßen Feldhäckslers 1 kann die Menge des zwischen den Walzen 3,4; 13,14 befindlichen Ernteguts 40 beobachtet bzw. überprüft werden. Dazu ist im Rahmen der Erfindung im Bereich der Walzen 3,4; 13,14 ein Sensor 48 vorgesehen, der z.B. als optischer Sensor ausgeführt ist, um die Dicke des zu einer Gutmatte verpressten Ernteguts 40 zu ermitteln. Möglich und bevorzugt ist auch ein Sensor 48, der ein Maß für eine Auslenkung der Vorpresswalzen erfasst und daraus ein Maß für die Dicke der tatsächlich vorhandene Gutmatte ableitet. Die erfassten Werte werden zur Verarbeitung an eine elektronische Fahrzeug-Steuerungsvorrichtung 9 weitergeleitet.

Bevorzugt ist zusätzlich ein Drucksensor vorhanden, der auf einen durch die Gutmatte verursachten Druck reagiert. Auch das Signal dieses Sensors wird der Fahrzeug-Steuerungsvorrichtung 9 übergeben und von dort gemeinsam mit dem Signal des optischen Sensors der Anzeigeeinrichtung 25 zugeführt.

In Abhängigkeit von in der in einem an die Fahrzeug-Steuerungsvorrichtung 9 angeschlossenen elektronischen Speicher 28 hinterlegten Wertepaaren von Schnittlängen und Gutmattendicken bzw. Gutmattendichten überprüft die Fahrzeug-Steuerungsvorrichtung 9, ob die gemessenen Gutmattenwerte den vorgegebenen Richtwerten entsprechen. Im Fall einer Abweichung werden die Drehzahlen der Häckseltrommel 30 und der Walzen 3,4; 13,14 solange geändert, bis die gewünschte Gutmattendichte bzw. Gutmattendicke vorhanden ist und Erntegutstauungen im Bereich der Walzen 3,4 abgebaut sind.

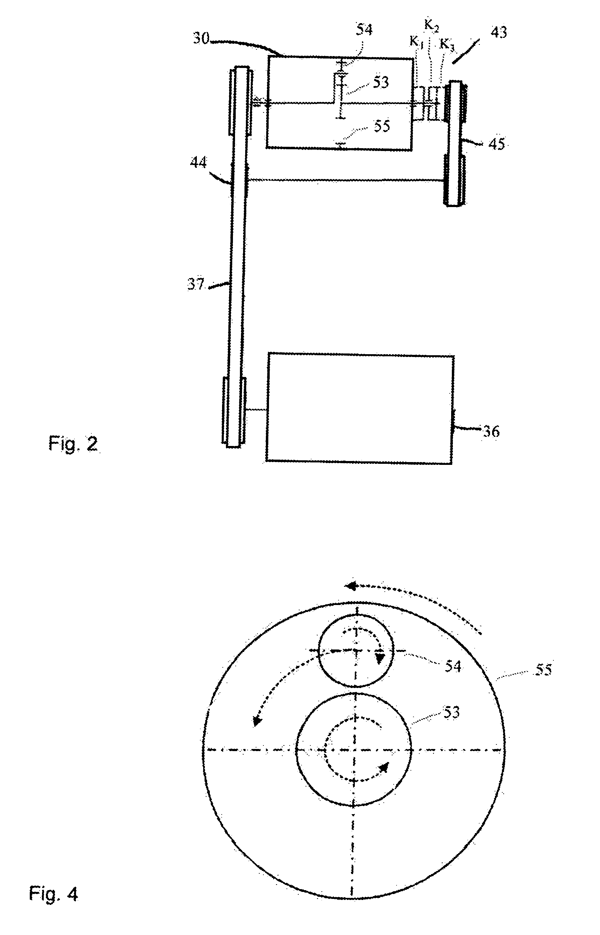

Bei einer in Fig. 2 schematisch dargestellten Ausführungsform erfolgt eine derartige Einstellung der Drehzahl der von dem Treibriemen 37 durch den Antriebsmotor 36 angetriebenen Häckseltrommel 30 über ein dreistufiges Schaltgetriebe 43, das mit einer Riemenscheibe 44 mit dem Treibriemen 37 verbunden ist und über einen weiteren Treibriemen 45 einen entsprechend untersetzten Antrieb der der Häckseltrommel 30 bewirkt.

Dabei ist beträgt die Drehzahl bei einer Eingangsdrehzahl von 1080 U/min und bei geschlossenen K₁, K₂ und K₃ 1080 U/min, sodass die Eingangsdrehzahl 1:1 durchgereicht wird. Alternativ kann die Ausgangsdrehzahl und damit die Drehzahl der Häckseltrommel durch entsprechende Schaltstufen auf hier z.B. 960 U/min abgesenkt oder auf 1440 U/min erhöht werden, ohne die Eingangsdrehzahl zu ändern. Möglich ist auch der Einsatz eines anders übersetzten Planetengetriebes mit einer größeren oder kleineren Abstufung. Wenn z.B. die Drehzahl des Sonnenrades 53 gleich Null ist und die Drehzahl des Hohlrades 54 gleich 14440 U/min, ergibt sich bei den hier gewählten Zähnezahlen die Umlaufdrehzahl des Planetenrades 53 zu 1080 U/min.

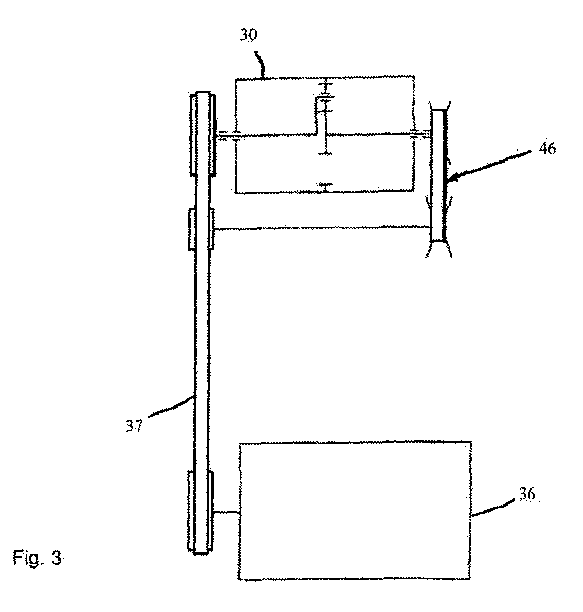

Bei einer anderen Ausführungsform des Feldhäckslers 1 nach Fig. 3 erfolgt dagegen eine stufenlose Veränderung der Drehzahl der Häckseltrommel 30 mittels eines mit einer Antriebswelle des Antriebsmotors 36 entsprechend gekoppelten kontinuierlich verstellbaren Variator-Getriebes 46. Eine stufenlos einstellbare Übersetzung über nicht näher gezeigte Kegelschelbenpaare eines Variators 46 ermöglicht bei dieser Ausführungsform eine angepasste Einstellung der Drehzahlen von Häckseltrommel 30 und den Zuführwalzen 3,4; 13,14.

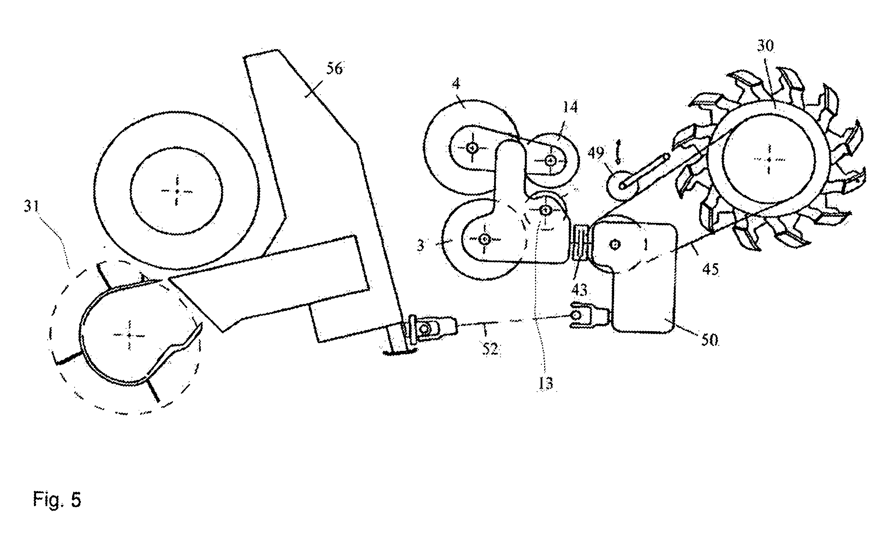

Die Drehzahlen der Häckseltrommel 30 und der Zuführwalzen 3,4; 13,14 können ganz einfach an Hand eines in einem erfindungsgemäßen Feldhäcksler 30 einsetzbaren und in Fig. 4 angedeuteten Planetengetriebes aneinander angepasst eingestellt bzw. zur Einstellung der gewünschten Gutmattendicke bzw. -dichte oder deren Konstanthaltung verändert werden. In Fig. 5 ist eine schematische Seitenansicht des Vorsatzgeräts 31, der Zuführeinrichtung 10 und der Häckseltrommel 30 dargestellt. Ein Antriebsblock 50 wird über einen Treibriemen 45 angetrieben. Der Treibriemen 45 wird mittels einer Spanneinrichtung 49 gespannt. Über das Schaltgetriebe 43 kann dessen Übersetzung variabel angepasst werden, um die Drehzahl der Häckseltrommel 30 und die Fördergeschwindigkeit der Zuführeinrichtung 3, 4, 13, 14 an die aktuellen Bedingungen anzupassen.

Die Gelenkwelle 52 verbindet den Antriebsblock 50 mit dem Vorsatzgerät 31, an welchem eine Pick-Up-Trommel 56 angeordnet ist, um das Erntegut 40 aufzunehmen.

In allen Fällen kann eine Übersetzung oder auch eine Untersetzung der Drehzahl des Motors 36 möglich sein, um eine optimale Abstimmung zu erzielen. Bevorzugt sind Übersetzungsverhältnisse zwischen etwa 1:4 und 4:1, wobei noch größere und kleinere Verhältnisse möglich sind und von den jeweiligen Bedingungen und insbesondere dem eingesetzten Motor abhängen.

Die Erfindung Ist nicht auf die beschriebenen Ausführungsbeispiele beschränkt, sondern kann auf vielfältige Weise verändert werden. Es versteht sich, dass anstelle von Wertepaaren aus Schnittlänge und Gutmattendichte bzw. -höhe auch ein funktionaler Zusammenhang in dem Speicher 28 abgespeichert sein kann. Dieser funktionale Zusammenhang kann dann zur Überprüfung bzw. Einstellung der gewünschten Gutmattenhöhe über eine Anpassung der Drehzahlen von Häckseltrommel 30 und Walzen 3,4; 13,14 benutzt werden.

Ferner versteht sich, dass die Bedienperson 26 sowohl die Abfrage an den Speicher 28 als die notwendigen Umstellungen der Betriebsbedingungen des Feldhäckslers 1 selbsttätig manuell vornehmen kann. Natürlich steht es der Bedienperson erfindungsgemäß frei, auch ohne eine Datenaufnahme und anschließende Überprüfung mit vorher festgelegten Vergleichs- bzw. Richtwerten die Betriebsparameter wie die Drehzahlen der Häckseltrommel 30 und der Walzen 3,4; 13,14 zu verändern. Dadurch kann erfindungsgemäß auf sich schnell ändernde Verhältnisse reagiert werden, sowie bei einer Fehlfunktion der Sensoren ein wirtsohaftlicher Betriebsablauf sichergestellt werden.

### Bezugszeichenliste:

- 1: Feldhäcksler
- 2: Gehäuseeinrichtung
- 3: untere Einzugswalze
- 4: obere Einzugswalze
- 5: Bedieneinrichtung
- 6: Belastungsmittel
- 8: Hydraulisches System
- 9: Fahrzeug-Steuerungsvorrichtung
- 10: Zuführeinrichtung
- 11: Hydraulikzylinder
- 12: Hydrospeicher
- 13: untere Einzugswalze
- 14: obere Einzugswalze
- 17: Radeinschlag
- 19: Gehäuse
- 21: GPS-Sensor
- 22: Rad
- 23: Gutmattendicke
- 24: Fahrgestell
- 26: Anzeigeeinrichtung
- 26: Benutzer
- 27: Recheneinheit
- 30: Häckseltrommel
- 31: Vorsatzgerät
- 32: Nachzerkleinerungseinrichtung
- 33: Auswurfkrümmer
- 34: Fahrzeugkabine
- 35: Auswurfkrümmerklappe
- 36: Antriebsmotor
- 37: Antriebsriemen
- 38: Sensor
- 39: Leitung
- 40: Erntegut
- 41: Nachbeschleuniger
- 42: Förderschacht
- 43: Schaltgetriebe
- 44: Riemenscheibe
- 45: Treibriemen
- 46: Variator
- 48: Sensor
- 49: Spanneinrichtung
- 50: Antriebsblock
- 52: Gelenkwelle
- 53: Sonnenrad
- 54: Planetenrad
- 55: Hohlrad
- 56: Pick-Up-Trommel

## Patentansprüche

1. Feldhäcksler zur Bearbeitung landwirtschaftlicher Flächen mit einer Antriebseinheit (26), einer Gehäuseeinrichtung (2), einer Steuerungseinrichtung (5), einer Flächenbearbeitungsvorrichtung (31) zur Aufnahme von Erntegut (40), einer an der Gehäuseeinrichtung (2) angebrachten der Flächenbearbeitungsvorrichtung (31) zugeordneten Zuführeinrichtung (3, 4; 13, 14) für das zu häckselnde Erntegut (40) und einer Gutbearbeitungseinrichtung (30) für das Erntegut (40), wobei mit der Zuführeinrichtung (3, 4; 13, 14) das von dem Feldhäcksler (1) aufgenommene Erntegut (40) zu der Gutbearbeitungseinrichtung (30) transportiert wird, **dadurch gekennzeichnet, dass** ein Sensor (48) zur Erfassung eines Maßes für die Gutmattendicke (23) vorgesehen ist und ein Regelkreis vorgesehen ist, der betreibbar ist, die Fördergeschwindigkelt der Zuführeinrichtung (3, 4; 13, 14) in Abhängigkeit der Gutmattendicke (23) derart einzustellen, dass eine gewählte Gutmattendicke erreicht und beibehalten wird.

2. Feldhäcksler nach Anspruch 1, **dadurch gekennzeichnet, dass** die Fördergeschwindigkeit der Zuführeinrichtung (3, 4; 13, 14) zumindest stufenweise veränderbar ist.

3. Feldhäcksler nach Anspruch 1 oder 2, **dadurch gekennzeichnet, dass** das Maß für die Gutmattendicke (23) über einen Abstand der Einzugswalzen des wenigstens einen Einzugswalzenpaares oder über eine Auslenkung wenigstens einer Einzugswalze des wenigstens einen Einzugswalzenpaares abgeleitet wird.

4. Feldhäcksler nach einem der Ansprüche 1 bis 3, **dadurch gekennzeichnet, dass** die Signale des Sensors von der Steuerungseinrichtung (5) verarbeitbar sind, um die Fördergeschwindigkeit der Zuführeinrichtung (3, 4; 13, 14) in Abhängigkeit einer Differenz der angestrebten Gutmattendicke (23) von der erfassten Gutmattendicke einzustellen.

5. Feldhäcksler nach einem der Ansprüche 1 bis 4, **dadurch gekennzeichnet, dass** zur Erzielung einer angestrebten Gutmattendicke (23) eine Bearbeitungsgeschwindigkeit und insbesondere eine Drehzahl der Flächenbearbeitungsvorrichtung (31) zur Aufnahme von Erntegut (40) einstellbar ist.

6. Feldhäcksler nach Anspruch 5, **dadurch gekennzeichnet, dass** die Zuführeinrichtung aus wenigstens einem Paar vorbelastbarer Walzen (3, 4; 13, 14) gebildet ist, zwischen denen von dem Feldhäcksler (1) aufgenommenes Erntegut (40) zu der Gutbearbeitungseinrichtung (30) transportiert wird.

7. Feldhäcksler nach einem der vorangehenden Ansprüche, **dadurch gekennzeichnet, dass** ein Einzugsbereich der Zuführeinrichtung (3, 4; 13, 14) einstellbar ist.

## Claims

1. A forage harvester for processing agricultural surfaces comprising a drive unit (26), a housing device (2), a control device (5), a surface processing device (31) for picking up crop material (40), a feed device (3, 4; 13, 14) mounted to the housing device (2) and associated with the surface processing device (31) for the crop material (40) to be chopped, and a crop processing device (30) for the crop material (40), wherein the crop material (40) picked up by the forage harvester (1) is transported to the crop processing device (30) with the feed device (3, 4; 13, 14), **characterised in that** there is provided a sensor (48) for detecting a measurement for the crop material mat thickness (23) and there is provided a regulating circuit which is operable to adjust the conveying speed of the feed device (3, 4; 13, 14) in dependence on the crop material mat thickness (23) in such a way that a selected crop material mat thickness is achieved and maintained.

2. A forage harvester according to claim 1 **characterised in that** the conveying speed of the feed device (3, 4; 13, 14) is at least stepwise variable.

3. A forage harvester according to claim 1 or claim 2 **characterised in that** the measurement for the crop material mat thickness (23) is derived by way of a spacing of the intake rollers of the at least one pair of intake rollers or by way of a deflection of at least one intake roller of the at least one pair of intake rollers.

4. A forage harvester according to one of claims 1 to 3 **characterised in that** the signals of the sensor can be processed by the control device (5) to adjust the conveying speed of the feed device (3, 4; 13, 14) in dependence on a difference in the desired crop material mat thickness (23) from the detected crop material mat thickness.

5. A forage harvester according to one of claims 1 to 4 **characterised in that** a processing speed and in particular a rotary speed of the surface processing device (31) for picking up crop material (40) is adjustable for achieving a desired crop material mat thickness (23).

6. A forage harvester according to claim 5 **characterised in that** the feed device is formed by at least one pair of preloadable rollers (3, 4; 13, 14), between which crop material (40) picked up by the forage harvester (1) is transported to the crop material processing device (30).

7. A forage harvester according to one of the preceding claims **characterised in that** an intake region of the feed device (3, 4; 13, 14) is adjustable.

## Revendications

1. Ramasseuse-hacheuse destinée au traitement de surfaces agricoles avec une unité d'entraînement (26), un dispositif de boîtier (2), un dispositif de commande (5), un dispositif de traitement de surface (31) pour la réception de produit de récolte (40), un dispositif d'amenée (3, 4 ; 13, 14) associé au dispositif de traitement de surface (31), monté sur le dispositif de boîtier (2) pour le produit de récolte (40) à hacher et un dispositif de traitement de produit (30) pour le produit de récolte (40), le produit de récolte (40) reçu par la ramasseuse-hacheuse (1) étant transporté avec le dispositif d'amenée (3, 4 ; 13, 14) vers le dispositif de traitement de produit (30), **caractérisée en ce qu'**un capteur (48) est prévu pour la détection d'une grandeur pour l'épaisseur de recouvrement de produit (23) et un circuit de régulation est prévu, lequel peut fonctionner afin de régler la vitesse de transport du dispositif d'amenée (3, 4 ; 13, 14) en fonction de l'épaisseur de recouvrement de produit (23) de telle manière qu'une épaisseur de recouvrement de produit choisie soit obtenue et conservée.

2. Ramasseuse-hacheuse selon la revendication 1, **caractérisée en ce que** la vitesse de transport du dispositif d'amenée (3, 4 ; 13, 14) est modifiable au moins progressivement.

3. Ramasseuse-hacheuse selon la revendication 1 ou 2, caractérisée la grandeur pour l'épaisseur de recouvrement de produit (23) est dérivée d'une distance entre les rouleaux d'alimentation d'au moins une paire de rouleaux d'alimentation ou d'une déviation au moins d'un rouleau d'alimentation de l'au moins une paire de rouleaux d'alimentation.

4. Ramasseuse-hacheuse selon l'une quelconque des revendications 1 à 3, **caractérisée en ce que** les signaux du capteur peuvent être traités par le dispositif de commande (5) afin de régler la vitesse de transport du dispositif d'amenée (3, 4 ; 13, 14) en fonction d'une différence entre l'épaisseur de recouvrement de produit visée (23) et l'épaisseur de recouvrement de produit détectée.

5. Ramasseuse-hacheuse selon l'une quelconque des revendications 1 à 4, **caractérisée en ce qu'**une vitesse de traitement et en particulier une vitesse de rotation du dispositif de traitement de surface (31) pour la réception du produit de récolte (40) peut être réglée pour obtenir une épaisseur de recouvrement de produit visée (23).

6. Ramasseuse-hacheuse selon la revendication 5, **caractérisée en ce que** le dispositif d'amenée est constitué d'au moins une paire de rouleaux préchargeables (3, 4 ; 13, 14), entre lesquels du produit de récolte (40) reçu par la ramasseuse-hacheuse (1) est transporté vers le dispositif de traitement de produit (30).

7. Ramasseuse-hacheuse selon l'une quelconque des revendications précédentes, **caractérisée en ce qu'**une zone d'alimentation du dispositif d'amenée (3, 4 ; 13, 14) peut être réglée.
